Europäisches Patentamt

European Patent Office

Office européen des brevets

(11) Publication number: **0 136 920**
**B1**

(12) **EUROPEAN PATENT SPECIFICATION**

(45) Date of publication of patent specification: **18.01.89**

(21) Application number: **84306768.7**

(22) Date of filing: **04.10.84**

(51) Int. Cl.⁴: **C 04 B 26/02, C 04 B 38/00, F 16 L 1/04, E 21 B 33/13, E 21 B 33/138**

(54) **Expandable polymer concrete.**

(30) Priority: **04.10.83 US 538925**

(43) Date of publication of application:
**10.04.85 Bulletin 85/15**

(45) Publication of the grant of the patent:
**18.01.89 Bulletin 89/03**

(84) Designated Contracting States:
**DE FR GB IT NL SE**

(56) References cited:
**FR-A-1 341 244**
**FR-A-2 284 633**
**FR-A-2 344 509**
**US-A-3 420 299**
**US-A-3 599 435**
**US-A-3 878 686**
**US-A-4 226 911**
**US-A-4 389 320**

**PATENTS ABSTRACTS OF JAPAN, vol. 4, no. 151 (C-28) 633r, 23rd October 1980, page 11 C 28; & JP - A - 55 94 940 (MATSUSHITA DENKO K.K.) 18-07-1980**

(73) Proprietor: **Armeniades, Constantine Demosthenes**
**2127 Addison Road**
**Houston Texas 77030 (US)**
(73) Proprietor: **Krieger, Paul E.**
**12714 Old Oaks Drive**
**Houston Texas 77024 (US)**

(72) Inventor: **Armeniades, Constantine Demosthenes**
**2127 Addison Road**
**Houston Texas 77030 (US)**
Inventor: **Haque, Enamul**
**5309 Ashby, No. 15**
**Houston Texas 77005 (US)**

(74) Representative: **Harvey, David Gareth et al**
**Graham Watt & Co. Riverhead**
**Sevenoaks Kent TN13 2BN (GB)**

**Description**

Field of the Invention

This invention relates to improved polymer-based concretes and mortars, which undergo controlled expansion or show zero shrinkage upon hardening. The improvement can be used to form novel structural materials and in novel methods of construction. Such materials and methods, for example, can be used in the conversion of prior art types of polymer concrete to zero-shrinkage concretes with improved tensile and flexural strength; the use of various expanding polymer concretes as field joint filling materials in pipeline construction; the formulation of zero-shrinkage or expanding polymer mortars; and the use of expanding polymer concrete for downhold plugging of wells. There are many other applications of zero-shrinkage and expandable polymer concretes and mortars stemming from this invention and the invention is not limited to the cited examples.

Background of the Invention

Ordinary concrete consists of mineral aggregate (sand and gravel) bound together with portland cement, the latter hardening by reacting chemically with water to form a hydrated solid matrix integral with the aggregate. Polymer concrete contains mineral aggregate, but uses various polymeric materials (resins) instead of portland cement to bind the aggregate. The term "polymer concrete" as used here (and in the technical literature) does not include polymer-extended, water-base concretes. The latter are aqueous systems, containing water-soluble resins or latices, often in conjunction with portland cement.

In contrast, polymer concretes do not ordinarily contain free water in their formulations. (See "Polymers in Concrete": Proceedings of the Second International Congress, October 25—27, 1978, pp. 1—4, University of Texas at Austin, 1978.) Hardening of polymer concrete generally involves organic reactions (polymerization, cross-linking) which solidify the resin with the aggregate. These reactions are triggered by heat or by special chemical agents which are added to the resin. The overall process is termed "curing." Advantages of polymer concrete include fast curing rates, much higher strengths than ordinary concrete and impermeability to water. While the above properties are important in determining areas of application on polymer concrete, this invention focuses on another property: the dimensional changes (shrinkage or expansion) of the concrete system as it hardens.

All polymer concretes prepared in accordance with prior art shrink as they cure. This is due primarily to the polymerization and cross-linking reactions, which increase the density of the hardening resin. For example, polymerization of methyl methacrylate produces a shrinkage of 23% and cross-linking of unsaturated polyester/styrene systems a shrinkage of 12—14%.

In addition to this chemical shrinkage there is also thermal shrinkage, since curing reactions usually involve a rise in temperature which is either imposed externally on the system in order to trigger the cure or developed internally by the exothermic (heat generating) polymerization reactions. Thermal shrinkage occurs when the newly cured system cools down.

The overall shrinkage of current polymer concrete systems is kept down to levels of about 2% by the use of large amounts of inert fillers and aggregate (as high as 90% by weight of the total system). However, the concentration of shrinkage in the polymer matrix creates substantial local stresses, which reduce the strength of the cured system. Severe shrinkage stresses can cause cracking in the polymer to a degree which may result in failure of the concrete structure.

A system with zero shrinkage would obviously constitute a very significant improvement in the current technology of polymer concrete. Other things being equal, the dimensional stability and reduced internal stress concentrations in such a sytem would render it superior to currently used concretes. The invention discussed herein includes such a "zero shrinkage" system. However, the invention goes much further and includes expanding polymer concretes.

Summary of the Invention

In its general scope this invention comprises polymer concrete systems which expand to a controlled degree as they cure at constant pressure or alternatively generate appreciable positive pressures when forced to cure in a confined space. This expansion is achieved by incorporating into the polymer concrete system a hydrated mineral filler of the smectite (montmorillonite) group. The "smectite" or "montmorillonite group" of minerals, includes montmorillonite, beidellite, nontronite, saponite, and hectorite.

These minerals are the principal constituents of bentonite clays and "Fuller's earth." (See "Rock-forming Minerals" by W. A. Deer, R. A. Howie, and J. Zussman, Vol. 3, pp. 226—245 Wiley, New York, 1962.) These minerals release some of their water in the form of steam when the system attains curing temperatures. External heating of the curing system may be used to assist in obtaining the desired temperatures. The expanding filler is in the form of a fine powder, admixed intimately with the resin, so that the steam generated during the cure forms minute bubbles, evenly dispersed throughout the hardening resin.

An important feature of this invention is its ability to convert the vast majority of prior art polymer concrete systems (which shrink upon curing) to systems with controlled expansion or to zero-shrinkage systems by the addition of small amounts of expanding filler. Examples of expandable polymer concrete systems, which constitute embodiments of this invention, are systems using acrylic, polyester, vinyl ester, or epoxy resins as their polymer matrix with a variety of mineral aggregates, incorporating controlled amounts of a mineral from the montmorillonite group in the form of fine powder. It is the incorporation of this type of mineral onto the polymer concrete formulations that makes thes systems expandable.

These montmorillonite group minerals contain in their crystal structure 15 to 25% water of hydration, a fraction of which is releases as steam at temperatures above 100°C. Since steam occupies a volume of up to 100 times greater than that of the corresponding liquid water, a polymer concrete system which contains even small amounts of a montmorillonite group material will expand spontaneously when heated above 100°C.

Alternatively, if the system is cured in a confined space it will develop positive hydrostatic pressures against its enclosure. The expansion (or pressure) generated depends on several system parameters. These include (a) the chemical nature and amount of the polymer matrix, which determine the quantity of heat generated by the polymerization and cross-linking reactions; (b) the temperature and thermal conductivity of the materials surrounding the curing system and the size and shape of the curing structure, which affect the temperatures reached during the exothermic reactions; and (c) the weight fraction of the montmorillonite group mineral in the system, which determines the amount of water available for steam generation. Manipulation of these parameters in the formulation of different systems gives rise to novel structural materials and construction methods, which constitute significant improvements on prior art, as illustrated in the following examples.

Examples of Specific Embodiments and Applications

Example 1

Use.of montmorillonite to formulate zero-shrinkage polymer concretes with enhanced flexural and tensile strength

Table 1 shows in rows (1), (3), (5), (7) and (9) the composition and physical properties of prior art polymer concretes, with matrixes respectively formed of unsaturated polyester/styrene, methyl methacrylate, vinyl ester/styrene, and epoxy resins. All of these systems shrink upon curing as seen in Column (7). Addition of small amounts (2—3%) of finely dispersed montmorillonite converts these systems to the corresponding "zero-shrinkage" concretes, as shown in rows (2), (4), (6), (8) and (10), which have significantly higher flexural and tensile strengths (about 17 to 28% increase) as shown in Columns (11) and (13). They also have slightly lower compressive strengths (about 2—4%). This latter feature, however, has little practical consequence, since the use of these systems as structural materials is limited by their flexural and tensile strengths.

TABLE 1. COMPOSITION AND PROPERTIES OF ZERO-SHRINKAGE POLYMER CONCRETES OBTAINED BY THE USE OF EXPANDING FILLER

| Composition and Curing Conditions | | | | | | | Properties of Cured System | | | | | |
|---|---|---|---|---|---|---|---|---|---|---|---|---|
| Polymer (Resin) Matrix — Chemical Type | Wgt % | Cure Temperature (°C) | Peak Exotherm (°C) | Inert Aggregate Type | Montmorillonite (Wgt %) | Volume Shrinkage (-) Cure (%) | Compressive Strength (psi) | Increase or Decrease (+ or -) (%) | Flexural Strength (psi) | Increase or Decrease (+ or -) (%) | Splitting Tensile Strength (psi) | Increase or Decrease (+ or -) (%) |
| (1) Polyester/Styrene[a] | 18 | 80 | 200 | Fine Sand | 0 | -1.2 | 11250[f] | >-3.6 | 3300[g] | >+19.6 | 1800[h] | >+22.2 |
| (2) Polyester/Styrene[a] | 16 | 80 | 190 | Fine Sand | 2.2 | 0 | 10800 | | 3950 | | 2200 | |
| (3) Polyester/Styrene[c] | 21 | 30 | 180 | Silica Flour | 0 | -1.8 | 10600 | >-1.9 | 2150 | >+20.9 | 1560 | >+23.1 |
| (4) Polyester/Styrene[c] | 20 | 30 | 170 | Silica Flour | 3.0 | 0 | 10400 | | 2600 | | 1920 | |
| (5) Methyl methacrylate[b] | 15 | 40 | 165 | Fine Sand | 0 | -3.0 | 14270 | >-1.9 | 2280 | >+22.8 | 1640 | >+28.0 |
| (6) Methyl methacrylate[b] | 13 | 40 | 150 | Fine Sand | 2.8 | 0 | 14000 | | 2800 | | 2100 | |
| (7) Vinyl Ester/Styrene[c] | 15 | 80 | --- | Fine Sand | 0 | -2.0 | 10500 | >-3.3 | 2630 | >+17.1 | 1950 | >+17.9 |
| (8) Vinyl Ester/Styrene[d] | 14 | 80 | --- | Fine Sand | 2.0 | 0 | 10150 | | 3080 | | 2300 | |
| (9) Epoxy resin[e] | 18 | 100 | 210 | Fine Sand | 0 | -2.5 | 14500 | >-2.1 | 4000 | >+17.0 | 2620 | >+18.3 |
| (10) Epoxy resin[e] | 16 | 100 | 200 | Fine Sand | 2.5 | 0 | 14200 | | 4680 | | 3100 | |
| (1) | (2) | (3) | (4) | (5) | (6) | (7) | (8) | (9) | (10) | (11) | (12) | (13) |

Notes: (a) Dion Iso 6315 (Koppers Co.), 5% divinyl benzene(DVB); initiated w/1.5% benzoyl peroxide (BP)

(b) (Rhom & Haas Co.) 10% dimethylolpropane trimethacrylate(DMPTMA); initiated w/1.5% BP and 2% dimethyl-p-toluidene(DMPT)

(c) Dion Iso 6315 (Koppers Co.) 5% DVB; initiated w/1.5% methyl ethyl ketone peroxide(MEKPO), 0.5% Cobalt naphthenate(CN)

(d) Hetron 922 (Ashland Chemical Co.), 5% divinyl benzene; initiated w/1.5% MEKPO

(e) Epon 828 (Shell Chemical Co.) 65% Versamd 140(General Mills Inc.) 35%

(f) ASTM C-116: 3" dia x 3 1/2" cylinders

(g) ASTM D-790: 1/2" x 2" x 8" bars

(h) ASTM C-496: 2" dia x 4" cylinders

EP 0 136 920 B1

Examples 2A and 2B

Use of expandable polymer concrete for improved field joint filling of weight-coated pipelines

In the construction of oil and gas pipelines which are subject to water submersion or to high abrasion and impact, use is often made of weight-coated pipe, i.e. pipe encased in an annulus or jacket of portland-cement concrete often several inches thick. This jacket overcomes the natural buoyancy of the empty pipline and increases its stiffness and abrasion resistance. The mill-applied weight coating on standard pipe lengths stops short a few inches at each end, in order to leave room for joining the pipe segments by welding at the site of the pipeline installation (field jointing). Upon completion of the field welds, it becomes necessary to fill the annular area around the field joint in order to give a uniform outside diameter and stiffness to the pipeline.

Several polymer concrete formulations hold promise for this type of application, since they can be made to cure within minutes, allowing thus immediate manipulation of the pipeline. However, their shrinkage upon curing is a serious drawback, often causing separation of the joint-fill material from the mill-applied weight coating and sometimes cracking of the joint fill itself.

Use of an expanding polymer concrete, formulated by the addition of proper amounts of montmorillonite to a prior art polymer concrete system overcomes these problems and creates a superior joint fill. The positive pressure, generated as the material cures, forces the solidifying system against the pipe surface and into the interstices of the existing weight coating thus creating strong mechanical adhesion. The minimization of residual localized stresses in the cured system also enhances its physical properties. System 2A in Table 2 gives an example of the composition and properties of a nonporous expandable polymer concrete, suitable for field joint filling.

In certain submerged pipeline installations, where cathodic protection plays a major role in guarding against corrosion, it is often desirable to have a weight coating, which is permeable to water, so that the cathodic current can readily reach the outer surface of the pipe at the points where its external anticorrosion coating may be defective. The mill-applied portland cement weight coating of the pipe fulfills this requirement since it is readily permeated by water. It is equally important for the joint fill material to be water-permeable in order for the cathodic current to reach the defects in the field-applied anti-corrosion coating of the joint.

Prior art polymer concretes are impermeable to water and thus not suitable for this application. However, the expanding mineral filler of this invention can be used to formulate a system which will cure to a porous structure. This is achieved by increasing the concentration of montmorillonite and retarding the solidification of the resin with respect to the onset of the exotherm peak, so that the steam released from individual mineral particles coalesces into larger bubbles which form interconnecting channels that burst through the surface of the solidifying resin as it cures. System 2B in Table 2 gives an example of the composition and physical properties of an expandable porous polymer concrete. The important feature of this system is its rapid cure into a porous structure, which quickly develops compressive strength comparable to portland cement concrete. Thus, it represents a significant improvement over open-cell polyurethane foam systems, used currently for this application, since the foam systems are severely limited in their stiffness and compressive strength, which is usually less than 150 psi.

Table 2: Expandable Polymer Concrete
Formulations for Field Joint Filling

|  | System 2A (non porous) | System 2B (porous) |
|---|---|---|
| Polymer Matrix (wt%) | Vinyl Ester/Styrene[a] (15%) | Methylmethacrylate[b] (22%) |
| Inert Aggregate (wt% | Medium Sand & fines (79%) | Trap rock, $Fe_2O_3$, fines (66%) |
| Expanding Filler (wt%) | Montmorillonite (5-6%) | Montmorillonite (12%) |
| Set time (demold) | 3-4 minutes | 5 minutes |
| Volume Expansion | 6-8% | 35-40% |
| Density of cured system | 140 lbs/ft$^3$ | 140 lbs/ft$^3$ |
| Water absorption after 24-hr immersion | 1.2% by weight | 20.5% by weight |
| Compressive Strength @ 5 min. | 1000 psi | 600 psi |
| Compressive Strength @ 1 hr. | 9000 psi | 4300 psi |

Compressive Strength of portland cement
concrete: 4-5000 psi (after 8-24 days)

Notes: (a) Hetron 922 (Ashland Chemical Co.), 5% divinyl benzene; initiated w/1.5% MEKPO, 0.9% Cobalt naphthenate

(b) (Rohm and Haas Co.), 10% DMPTMA; initiated w/2% benzoyl peroxide, 0.5% Azoisobutyronitrile, 2% DMPT

## Examples 3A and 3B
Use of montmorillonite to formulate zero-shrinkage or expanding polymer mortars.

Polymer mortars (i.e. polymerizable liquid systems, containing fine inert particles) are used to repair cracks in damaged portland cement concrete structures; they also serve as a base for making polymer concrete, by blending in various mineral aggregates. Due to their relatively high resin content, polymer mortars show high shrinkage upon curing. Incorporation of the proper amounts of montmorillonite into the various polymer mortars renders them free of shrinkage or capable of expansion during cure. This is expected to increase the effectiveness of the mortars in repairing ordinary concrete structures by maximizing their ultimate penetration and minimizing residual stresses after curing.

In the case of polymer concretes made from zero-shrinkage mortars we expect them to show enhancements in flexural and tensile strength, comparable to those given in Table 1. Table 3 below shows two examples of polymer mortars, rendered expandable or shrink-free by addition of the proper amounts of montmorillonite.

Table 3:  Formulation of Expanding and
Zero-Shrinkage Polymer Mortars

| | Shrinkage (-) or Expansion (+) % |
|---|---|
| **System 3A:  Expanding Acrylic Mortar** | |
| (1) Methyl Methacrylate (45%)[a] with finely-powdered poly-methyl methacrylate and inert mineral filler | -8.2 |
| (2) Above system +10% montmorillonite | +5.0 |
| **System 3B:  Zero-Shrinkage polyester/Styrene Mortar** | |
| (1) Unsaturated polyester/styrene (40%)[b] with inert mineral filler fines (<100 mesh) | -4.5 |
| (2) Above system +5.2% montmorillonite | 0 |

Notes:    (a)  (Rohm and Haas Co.) 10% DMPTMA; initiated and 2% DMPT

(b)  Dion Iso 6315 (Koppers Co.) 5% divinyl benzene; initiated with 1.5% MEKPO, 0.5% cobalt napthenate

## Example 4
Use of expandable polymer concrete for downhole plugging of wells.

In regions containing several superimposed discrete layers of oil-containing strata (separate "reservoirs") a single well is usually drilled down to the deepest reservoir, which is the first to be tapped for production. When this reservoir becomes depleted, production is moved upwards to the next reservoir, using the same well bore. However, in order to prevent backflow of oil from the second reservoir into the lower, depleted strata it becomes necessary to plug the lowest portion of the well bore. This is currently done by pumping various fast-setting hydraulic concretes into the well (to the desired depth), topping the concrete with brine and/or drilling mud and maintaining external hydrostatic pressure on the well-head while the concrete cures. This pressure must be sufficient to overcome the downhole pressure of the well, thus forcing the concrete not only to fill the lowest portion of the casing but also to seep into the pores of the surrounding mineral formation in order to form the necessary "plug." These prior art processes require expensive field equipment for generating large hydraulic pressures and are not always successful.

Use of expandable polymer concrete would make the well-plugging process much easier and less costly. The new process involves merely injecting into the well the correct amount of properly formulated expandable polymer concrete and deploying a mechanical casing plug directly above it. The downhole temperature (80—300°C) starts the curing process and the reaction exotherm increases the temperature further, which causes sufficient steam to be liberated from the montmorillonite to expand the curing polymer concrete against the downhole pressures. The expanding system penetrates the voids and interstices of the porous rock as it hardens, immediately forming an effective barrier to oil percolation from higher formations. This process does not require expensive equipment for generating pressure and constitutes a safer, less costly, and more effective method for downhole plugging of wells than the current hydraulic processes.

A general description of an expandable polymer concrete suitable for downhole plugging is given in lines 1—4 lines of Table 4. It should be noted that the curing rate and expandability of the system can be adjusted to fit the downhole temperatures and pressures, corresponding to the depth of the well. This is done by varying the composition and level of initiator and the amount of montmorillonite, incorporated into the system. Systems 4A and 4B illustrate specific formulations, developed respectively for low temperature/pressure and high temperature/pressure applications.

## EP 0 136 920 B1

### Table 4: Expandable Polymer Concrete
### for Downhole Plugging of Wells

**General Formulation**

| | |
|---|---|
| Polymer Matrix: | Unsaturated Polyester/Styrene (12-25 wt %) |
| Inert Aggregate: | Course cement sand, gypsum (55-83%) |
| Expanding filler: | Montmorillonite (5-20%) depending on downhole pressure. |
| Initiator: | Organic peroxides or hydroperoxides, depending on downhole temperature |

| Specific Examples | System 4A | System 4B |
|---|---|---|
| Polymer matrix: | Polyester/Styrene$^{(a)}$ | Polyester/Styrene$^{(a)}$ |
| Inert aggregate: | Med. sand, gypsum | Course sand, gypsum |
| Expanding filler: | Montmorillonite (8%) | Montmorillonite (15%) |
| Initiator: | Benzoyl peroxide (1%) | t-butyl hydroperoxide (0.1%) |
| Cure temperature: | 80-100°C | 250-300°C |
| Expansion at 1 Atm: | 18-22% | --- |
| Compressive strength: | 7200 psi | --- |
| Pressure generated at constant volume cure: | --- | 3000 psi |
| Compressive strength: | --- | 9500 psi |

Notes:  (a) Dion Iso 6315 (Koppers Co.).

The foregoing description of the invention and examples are exemplary and not limiting and it is contemplated that those with ordinary skill in the art will be able to develop variations and equivalents which are considered as falling within the scope of the appended claims.

## Claims

1. A polymer concrete which does not shrink as it cures, comprising:
(a) a mineral aggregate;
(b) a polymer matrix from the group consisting of acrylic, polyester, vinyl ester or epoxy resin, for binding the mineral aggregate;
(c) a hydrated mineral filler in powder form;
(d) the aggregate polymer matrix and filler being in the sizes and amounts that at least one (i) the polymerization and cross-linking reaction temperatures and (ii) externally applied heat, is sufficient to release enough of the water of hydration of the filler as steam and cause the concrete not to shrink as it cures.

2. The polymer concrete of claim 1, wherein the mineral filler includes 15—25% water of hydration.

3. The polymer concrete of claim 1, wherein the filler is from the group consisting of montmorillonite, beidellite, nontronite, saponite and hectorite.

4. The polymer concrete of claim 1, wherein the reaction temperature exceeds about 80°C.

5. The polymer concrete of claim 1, wherein the amount of filler is controlled so that the polymer concrete is non-porous when it cures.

6. The polymer concrete of claim 1, wherein the amount of filler is sufficient so that the polymer concrete when it is cured is porous as a result of the coalescing of steam bubbles to form interconnecting channels that extend to the surface of the concrete.

7. A method of forming a polymer coating on a submerged pipeline using the polymer concrete of claim 6, comprising the steps of:

(a) surrounding the pipe with a frame for holding the concrete;

(b) introducing the concrete into the frame;

(c) retarding the solidification of the concrete until the interconnecting channels extend to the surface of the concrete.

8. A method of plugging an oil well using the polymer concrete of claim 1, comprising the steps of:

(a) injecting a sufficient amount of concrete into the well;

(b) positioning a mechanical casing plug directly above the concrete;

(c) allowing downhole temperature and reaction temperature to liberate steam from the filler for expanding the concrete.

**Patentansprüche**

1. Polymerbeton, der beim Aushärten nicht schrumpft, bestehend aus:

a) einem mineralischen Zuschlagstoff,

b) einer Polymermatrix aus der Gruppe Akryl-, Polyester-, Vinylester- oder Epoxydharz zum Binden des mineralischen Zuschlagstoffes,

c) einem wasserhaltigen mineralischen Füllstoff in Pulverform,

d) wobei der Zuschlagstoff, die Polymermatrix und der Füllstoff in solchen Größen und Mengen vorhanden sind, daß von (i) der Polymerisations- und Vernetzungsreaktionstemperatur und (ii) einer von außen angewandten Wärme zumindest eine Maßnahme ausreicht, genug Hydratwasser aus dem Füllstoff als Dampf freizusetzen und den Beton bei seiner Aushärtung nicht schrumpfen zu lassen.

2. Polymerbeton nach Anspruch 1, bei dem der mineralische Füllstoff 15—25% Hydratwasser enthält.

3. Polymerbeton nach Anspruch 1, bei dem der Füllstoff aus der aus Montmorillonite, Beidellit, Nontronit, Saponit und Hectorit bestehenden Gruppe ausgewählt ist.

4. Polymerbeton nach Anspruch 1, bei dem die Reaktionstemperatur etwa 80°C übersteigt.

5. Polymerbeton nach Anspruch 1, bei dem der Menge des Füllstoffes in der Weise kontrolliert ist, daß der Polymerbeton bei seiner Aushärtung nicht-porös ist.

6. Polymerbeton nach Anspruch 1, bei dem der Menge des Füllstoffes so groß ist, daß der Polymerbeton bei seiner Aushärtung porös ist, als Ergebnis des Zusammenwachsen von Dampfblasen zur Bildung untereinander verbundener Kanäle, die sich zur Oberfläche des Betons erstrecken.

7. Verfahren zum Herstellen einer Polymerbetonbeschichtung auf einer Unterwasserrohrleitung unter Verwendung des Polymerbetons nach Anspruch 6, bestehend aus den Schritten, daß

a) das Rohr mit einem Rahmen zum Halten des Betons umgeben wird,

b) der Beton in den Rahmen eingeführt wird,

c) die Verfestigung des Betons verzögert wird, bis sich die untereinander verbundenen Kanäle zur Oberfläche des Betons erstrecken.

8. Verfahren zum Verschließen einer Ölbohrung unter Verwendung des Polymerbetons nach Anspruch 1, bestehend aus den Schritten, daß

a) eine ausreichende Menge von Beton in die Bohrung eingespritzt wird,

b) ein mechanischer Bohrungsgehäusestopfen direkt über dem Beton angebracht wird,

c) durch die Bohrlochtemperatur und die Reaktionstemperatur Dampf aus dem Füllstoff zum Ausdehnen des Betons freigesetzt werden können.

**Revendications**

1. Béton à base de polymère qui ne présente pas un retrait lorsqu'il durcit comprenant:

a) un granulet minéral;

b) un matrice en polymère choisie dans le groupe comprenant les résines acryliques polyesters esters vinylique ou époxy afin de lier le granulat minéral;

c) une charge minérale hydratée sous forme pulvérulente;

b) le granulat, la matrice en polymère et la charge ayant des dimensions et étant présents en quantités telles que l'une au moins (i) des température de réaction de polymérisation et de réticulation et (ii) de la chaleur appliquée extérieurement est suffisante pour libérer suffisement d'eau d'hydratation de la charge sous forme de vapeur et amener le béton à ne pas se contracter tandis qu'il durcit.

2. Béton à base de polymère suivant la revendication 1 caractérisé en ce que la charge minérale comporte de 15 à 25% d'eau d'hydratation.

3. Béton à base de polymère, suivant la revendication 1 caractérisé en ce que la charge est choisie dans le groupe comprenant la montmorillonite, la beidellite, la nontronite, la saponite et l'hectorite.

4. Béton à base de polymère, suivant la revendication 1 caractérisé en ce que la température de réaction dépasse environ 80°C.

5. Béton à base de polymère, suivant la revendication 1 caractérisé en ce que la quantité de charge est controlée de telle façon que le béton à base de polymère soit non poreux lorsqu'il durcit.

6. Béton à base de polymère, suivant la revendication 1 caractérisé en ce que la quantité de charge est suffisante pour que le béton à base de polymère, une fois durci soit poreux par suite de la coalescence de bulles de vapeur pour former des canaux d'interconnexion qui s'étendu jusqú à la surface du béton.

7. Procédé de formation d'un revetement en béton à base de polymère sur une canalisation immergée en utilisant le béton à base de polymère suivant la revendication 6 comprenant les étapes consistant à:

a) entourer la canalisation avec un coffrage pour maintenir le béton;

b) introduire le béton dans le coffrage;

c) retarder la solidification du béton jusqu' à ce que les canaux d'interconnexion s'étendent jusqu' à la sur face du béton.

8. Procédé d'obturation d'un puits de pétrole en utilisant le béton à base de polymère suivant la revendication 1 comprenant les étapes consistants à:

a) injecter une quantité suffisante de béton dans le puits;

b) mettre en place un bouchon de cuvelage mécanique directement au dessus du béton;

c) autoriser la température en fond de puits et la température de réaction à libérer de la vapeur à partir de la charge afin de provoquer une expansion du béton.